# EUROPÄISCHE PATENTANMELDUNG

(11) **EP 3 918 900 A1**
(43) Veröffentlichungstag der Anmeldung: **08.12.2021**
(21) Anmeldenummer: 21176468.3
(22) Anmeldetag: 28.05.2021
(51) Int. Cl.: A01C 7/12, A01C 19/02, A01C 7/08

(54) **DOSIERER ZUM DOSIEREN VON DOSIERGUT**

(30) Priorität: 05.06.2020 DE 102020114978
(71) Anmelder: Horsch Maschinen GmbH, 92421 Schwandorf (DE)
(72) Erfinder: Eckl, Matthias, 92421 Schwandorf (DE)
(74) Vertreter: v. Bezold & Partner Patentanwälte - PartG mbB

(57) **Zusammenfassung**

Die Erfindung betrifft einen Dosierer (5.1-5.4) zum Dosieren von Dosiergut (z.B. Saatgut) in einer landwirtschaftlichen Maschine, mit einem Dosierrad zum Dosieren des Dosierguts, einer Koppelwelle zum Antrieb des Dosierrads bei einer Konfiguration des Dosierers (5.1-5.4) als Normaldosierer, einer ersten Kupplung, die wahlweise bei einer Konfiguration des Dosierers (5.1-5.4) als Normaldosierer die Koppelwelle mit dem Dosierrad drehstarr koppelt oder bei einer Konfiguration des Dosierers (5.1-5.4) als Fahrgassendosierer die Koppelwelle von dem Dosierrad entkoppelt, so dass sich das Dosierrad relativ zu der Koppelwelle drehen kann, und mit einer Vorgelegewelle (7) zum Antrieb des Dosierrads bei einer Konfiguration des Dosierers (5.1-5.4) als Fahrgassendosierer. Die Erfindung sieht vor, dass der Dosierer (5.1-5.4) eine zweite Kupplung aufweist, die wahlweise bei einer Konfiguration des Dosierers (5.1-5.4) als Normaldosierer die Vorgelegewelle (7) von dem Dosierrad entkoppelt, so dass sich das Dosierrad relativ zu der Vorgelegewelle (7) drehen kann, oder bei einer Konfiguration des Dosierers (5.1-5.4) als Fahrgassendosierer die Vorgelegewelle (7) mit dem Dosierrad drehstarr koppelt.

## Beschreibung

Die Erfindung betrifft einen Dosierer zum Dosieren von Dosiergut, insbesondere zum Dosieren von Saatgut in einer Drillmaschine.

Aus EP 2 832 203 A1 ist eine Drillmaschine bekannt, die zum Dosieren von Saatgut zahlreiche Dosierer aufweist, die in einer Reihe rechtwinklig zur Zugrichtung der Drillmaschine angeordnet sind. Die Dosierer können hierbei durch eine gemeinsame Hauptantriebswelle angetrieben werden, die durch sämtliche Dosierer hindurchgeht, wobei die Dosierräder in den einzelnen Dosierern durch jeweils eine Kupplung wahlweise mit der Hauptantriebswelle verbunden oder von der Hauptantriebswelle getrennt werden können.

Zur Konfiguration eines Dosierers als Fahrgassendosierer wird das Dosierrad des Fahrgassendosierers dann von der Hauptantriebswelle entkoppelt, so dass die Hauptantriebswelle den Fahrgassendosierer nicht antreibt.

Zur Konfiguration eines Dosierers als Normaldosierer wird das Dosierrad des Normaldosierers dagegen mit der Hauptantriebswelle zusammengekoppelt, so dass die Hauptantriebswelle den Normaldosierer antreibt.

Der Antrieb der Fahrgassendosierer erfolgt dagegen durch eine separate Vorgelegewelle, die parallel zu der Hauptantriebswelle entlang der Reihe von Dosierern erfolgt. Zum Antrieb der einzelnen Fahrgassendosierer ist auf der Vorgelegewelle jeweils ein Zahnrad angeordnet, das in ein entsprechendes Zahnrad eingreift, das drehbar auf der Hauptantriebswelle angeordnet und drehstarr mit dem Dosierrad des jeweiligen Fahrgassendosierers verbunden ist.

Nachteilig an dieser bekannten Drillmaschine ist der große Aufwand zur Umkonfiguration der einzelnen Dosierer entweder als Fahrgassendosierer oder als Normaldosierer. So benötigt diese Umkonfiguration ein Werkzeug und ist auch mit einem relativ großen Zeitaufwand verbunden. Darüber hinaus besteht auch die Gefahr einer Fehlbedienung, wenn ein Dosierrad fälschlicherweise sowohl mit der Hauptantriebswelle als auch mit der Vorgelegewelle verbunden ist.

Der Erfindung liegt deshalb die Aufgabe zugrunde, einen entsprechend verbesserten Dosierer zu schaffen, der einfach und betriebssicher umkonfigurierbar ist.

Diese Aufgabe wird durch einen Dosierer gemäß dem Hauptanspruch gelöst.

Der erfindungsgemäße Dosierer eignet sich allgemein zum Dosieren von Dosiergut, wie beispielsweise Saatgut oder Dünger, um nur einige Beispiele zu nennen. In dem bevorzugten Ausführungsbeispiel der Erfindung ist der Dosierer in einer Drillmaschine angeordnet und dient dort zum Dosieren von Saatgut. Die Erfindung ist jedoch hinsichtlich des Dosierguts nicht auf Saatgut beschränkt, sondern auch mit anderen Typen von Dosiergütern realisierbar.

In Übereinstimmung mit der eingangs beschriebenen bekannten Drillmaschine gemäß EP 2 832 203 A1 weist auch der erfindungsgemäße Dosierer mindestens ein drehbares Dosierrad zum Dosieren des Dosierguts auf, wobei jeder Dosierer beispielsweise auch ein Feindosierrad und ein Normaldosierrad aufweisen kann.

Darüber hinaus weist der erfindungsgemäße Dosierer in Übereinstimmung mit dem eingangs beschriebenen bekannten Dosierer gemäß EP 2 832 203 A1 eine Antriebswelle auf, die zum Antrieb des Dosierers bei einer Konfiguration des Dosierers als Normaldosierer dient, wobei diese Antriebswelle im Rahmen der Erfindung auch als Koppelwelle bezeichnet wird und eine Zusatzfunktion hat, wie noch detailliert beschrieben wird.

Eine weitere Übereinstimmung mit dem eingangs beschriebenen bekannten Dosierer gemäß EP 2 832 203 A1 besteht darin, dass das drehbare Dosierrad wahlweise mit der Antriebswelle (Koppelwelle) gekoppelt oder von der Antriebswelle (Koppelwelle) entkoppelt werden kann. Hierzu dient eine verstellbare erste Kupplung, die bei einer Konfiguration des Dosierers als Normaldosierer die Koppelwelle mit dem Dosierer drehstarr koppelt, wohingegen die verstellbare erste Kupplung bei einer Konfiguration des Dosierers als Fahrgassendosierer die Koppelwelle von dem Dosierrad entkoppelt, so dass sich das Dosierrad relativ zu der Koppelwelle drehen kann. Die Stellung der ersten Kupplung legt also fest, ob der Dosierer als Normaldosierer oder als Fahrgassendosierer konfiguriert ist.

Darüber hinaus weist auch der erfindungsgemäße Dosierer eine drehbare Vorgelegewelle auf, die zum Antrieb des Dosierrads dient, wenn der Dosierer als Fahrgassendosierer konfiguriert ist.

Der erfindungsgemäße Dosierer zeichnet sich nun durch eine verstellbare zweite Kupplung auf, die wahlweise bei einer Konfiguration des Dosierers als Normaldosierer die Vorgelegewelle von dem Dosierrad entkoppelt, so dass sich das Dosierrad relativ zu der Vorgelegewelle frei drehen kann oder bei einer Konfiguration des Dosierers als Fahrgassendosierer die Vorgelegewelle mit dem Dosierrad drehstarr koppelt.

Bei dem erfindungsgemäßen Dosierer steuert die erste Kupplung also die Kopplung zwischen dem Dosierrad und der Koppelwelle, während die zweite Kupplung die Kopplung zwischen dem Dosierrad und Vorgelegewelle steuert.

In dem bevorzugten Ausführungsbeispiel der Erfindung werden die beiden Kupplungen gemeinsam von der Koppelwelle angesteuert und zwar vorzugsweise durch eine axiale Verschiebung der Koppelwelle zwischen einer Fahrgassenstellung und einer Normalstellung.

In der Fahrgassenstellung steuert die Koppelwelle die erste Kupplung so, dass das Dosierrad von der Koppelwelle entkoppelt wird, so dass das Dosierrad von der Koppelwelle nicht angetrieben wird. Die zweite Kupplung wird dagegen in der Fahrgassenstellung der Koppelwelle so angesteuert, dass die Vorgelegewelle mit dem Dosierrad gekoppelt wird, so dass das Dosierrad von der Vorgelegewelle angetrieben werden kann.

In der Normalstellung der Koppelwelle steuert die Koppelwelle die erste Kupplung dagegen so an, dass das Dosierrad mit der Koppelwelle gekoppelt wird, so dass die Koppelwelle das Dosierrad antreibt. Die zweite Kupplung wird dagegen in der Normalstellung der Koppelwelle so angesteuert, dass die Vorgelegewelle von dem Dosierrad entkoppelt wird.

Diese Steuerung der beiden Kupplungen in Abhängigkeit von der Axialstellung der Koppelwelle erfolgt vorzugsweise so, dass entweder die Vorgelegewelle oder die Koppelwelle mit dem Dosierrad gekoppelt ist, so dass eine zeitgleiche Kopplung des Dosierrads sowohl mit der Koppelwelle als auch mit der Vorgelegewelle konstruktiv ausgeschlossen ist. Dadurch werden die eingangs zum Stand der Technik erwähnten Fehlbedienungen verhindert, wenn ein Dosierrad sowohl mit der Vorgelegewelle als auch mit der Hauptantriebswelle verbunden ist.

In dem bevorzugten Ausführungsbeispiel der Erfindung ist das Dosierrad auf einer drehbaren Hohlwelle angeordnet, wobei das Dosierrad drehstarr mit der Hohlwelle verbunden oder einstückig an die Hohlwelle angeformt ist. Die drehstarre Verbindung zwischen dem Dosierrad und der Hohlwelle kann beispielsweise dadurch erfolgen, dass auf der äußeren Mantelfläche der Hohlwelle Formschlusselemente (z.B. Axialstege) angeformt sind, die in entsprechende Formschlusselemente in der Wellenbohrung des Dosierrads eingreifen.

Die Hohlwelle ist bei dem bevorzugten Ausführungsbeispiel der Erfindung vorzugsweise ein Bestandteil der ersten Kupplung, die das Dosierrad mit der Hauptantriebswelle koppeln oder von der Hauptantriebswelle entkoppeln kann. Hierzu weist die Hohlwelle vorzugsweise innen Koppelelemente auf, die sich in axialer Richtung nur über einen Teil der Koppelwelle erstrecken und dazu dienen, die Hohlwelle drehstarr mit der Koppelwelle zu verbinden.

Für diese drehstarre Verbindung zwischen der Koppelwelle und der Hohlwelle weist die Koppelwelle vorzugsweise außen auf ihrer Mantelfläche entsprechende Koppelelemente auf, die sich in axialer Richtung ebenfalls nur über einen Teil der Koppelwelle erstrecken.

In der axialen Normalstellung der Koppelwelle liegen die Koppelelemente der Hohlwelle einerseits und die Koppelelemente der Koppelwelle andererseits axial in Deckung und greifen dann formschlüssig ineinander, so dass die Koppelwelle drehstarr mit der Hohlwelle verbunden ist.

In der Fahrgassenstellung der Koppelwelle liegen die Koppelelemente der Hohlwelle einerseits und die Koppelelemente der Koppelwelle andererseits dagegen axial zueinander versetzt und greifen deshalb nicht formschlüssig ineinander ein, so dass die Koppelwelle relativ zu der Hohlwelle drehbar ist und das Dosierrad von der Koppelwelle entkoppelt wird.

In Abhängigkeit von der Axialstellung der Koppelwelle (Normalstellung oder Fahrgassenstellung) wird der Formschluss zwischen den Koppelelementen der Koppelwelle einerseits und der Hohlwelle andererseits also in Eingriff gebracht oder gelöst, wodurch die Funktion der ersten Kupplung bewirkt wird.

Die zweite Kupplung zur Kopplung zwischen der Vorgelegewelle einerseits und des Dosierrads andererseits ist jedoch technisch in anderer Weise realisiert, wie nachfolgend beschrieben wird.

So trägt die Koppelwelle hierfür ein Zahnrad, wobei dieses Zahnrad auf einer Drehfläche der Koppelwelle relativ zu der Koppelwelle frei drehbar ist, wohingegen das Zahnrad auf der Koppelwelle axial fixiert ist und mit der Koppelwelle axial verschiebbar ist. Eine axiale Verschiebung der Koppelwelle führt also zwingend zu einer entsprechenden axialen Verschiebung des drehbar auf der Koppelwelle angebrachten Zahnrads.

Die Vorgelegewelle trägt ein entsprechendes Zahnrad, das dagegen drehstarr mit der Vorgelegewelle verbunden oder einstückig an die Vorgelegewelle angeformt ist.

Die Hohlwelle des Dosierrads trägt stirnseitig eine Stirnverzahnung, die einen Bestandteil der zweiten Kupplung bildet.

Das vorstehend erwähnte Zahnrad auf der Koppelwelle weist als Bestandteil der zweiten Kupplung stirnseitig eine entsprechende Stirnverzahnung auf.

In Abhängigkeit von der Axialstellung der Koppelwelle (Normalstellung oder Fahrgassenstellung) und der dadurch definierten Axialstellung des Zahnrades auf der Koppelwelle greifen die beiden Stirnverzahnungen an der Hohlwelle einerseits und an dem Zahnrad andererseits ineinander ein oder werden voneinander getrennt.

In der axialen Fahrgassenstellung der Koppelwelle wird das Zahnrad auf der Koppelwelle mit seiner Stirnverzahnung gegen die Stirnverzahnung der Hohlwelle gedrückt, so dass die beiden Stirnverzahnungen ineinander eingreifen und dadurch die Vorgelegewelle drehstarr mit der Hohlwelle und damit auch mit dem Dosierrad verbinden. Das Zahnrad auf der Vorgelegewelle liegt dann axial in Deckung mit dem Zahnrad auf der Koppelwelle, so dass das Zahnrad auf der Vorgelegewelle in das Zahnrad auf der Koppelwelle eingreift und das Dosierrad somit von der Vorgelegewelle antreibbar ist.

In der axialen Normalstellung der Koppelwelle wird die Stirnverzahnung an dem Zahnrad auf der Koppelwelle dagegen von der Stirnverzahnung an der Hohlwelle getrennt, so dass sich die Hohlwelle relativ zu dem Zahnrad auf der Koppelwelle drehen kann. Das Zahnrad auf der Vorgelegewelle ist dann axial zu dem Zahnrad auf der Koppelwelle versetzt, so dass das Zahnrad auf der Vorgelegewelle nicht in das Zahnrad auf der Koppelwelle eingreift und das Dosierrad von der Vorgelegewelle entkoppelt ist.

Die zweite Kupplung steuert also die Kopplung zwischen der Vorgelegewelle einerseits und dem Dosierrad andererseits.

In dem bevorzugten Ausführungsbeispiel der Erfindung weist die Koppelwelle in ihrer äußeren Mantelfläche axiale Sicherungsstege auf, um den axialen Bewegungsspielraum der Koppelwelle zu begrenzen. Die Hohlwelle weist innen entsprechende Anschläge auf, um den axialen Bewegungsspielraum der Koppelwelle zu begrenzen, wenn die Sicherungsstege der Koppelwelle an die Anschläge der Hohlwelle anstoßen.

Es wurde eingangs bereits erwähnt, dass in einer Drillmaschine üblicherweise zahlreiche Dosierer in einer Reihe nebeneinander angeordnet sind, wobei die Dosierräder der Dosierer koaxial ausgerichtet sind. Hierbei hat vorzugsweise jeder der Dosierer eine eigene Koppelwelle, die unabhängig von den anderen Dosierern axial verschiebbar ist, um die Kupplungsstellungen einzustellen. Der Rotationsantrieb der Koppelwelle erfolgt hierbei durch eine Hauptantriebswelle, die vorzugsweise koaxial zu der Koppelwelle verläuft und beispielsweise durch die Koppelwelle durchgehen kann. Beispielsweise kann die drehstarre Verbindung zwischen der Hauptantriebswelle und der Koppelwelle durch die Verbindung eines Außensechskants der Hauptantriebswelle mit einem Innensechskant der Koppelwelle erfolgen. Wichtig ist hierbei, dass die drehstarre Verbindung zwischen der Hauptantriebswelle einerseits und der Koppelwelle andererseits die axiale Verschiebbarkeit der Koppelwelle nicht beeinträchtigt.

In dem bevorzugten Ausführungsbeispiel der Erfindung weisen die einzelnen Dosierer jeweils ein Dosierergehäuse auf, das aus einem Grundgehäuse und einem Lagerdeckel besteht, wobei der Lagerdeckel schwenkbar an dem Grundgehäuse angelenkt ist. Der Lagerdeckel kann hierbei eine integrierte axiale Sicherung aufweisen, um den axialen Bewegungsspielraum der Koppelwelle zu begrenzen.

Weiterhin ist zu erwähnen, dass das Zahnrad auf der Vorgelegewelle mehrteilig sein kann, um ohne eine Demontage der Vorgelegewelle eine Demontage des Zahnrads auf der Vorgelegewelle zu ermöglichen. So müssen auf der Vorgelegewelle nur für solche Dosierer Zahnräder angeordnet werden, die die Option einer Konfiguration als Fahrgassendosierer haben sollen. Solche Dosierer, die nie als Fahrgassendosierer dosiert werden sollen, benötigen dagegen auf der Vorgelegewelle kein Zahnrad, so dass das Zahnrad demontiert werden kann. Beispielsweise kann das Zahnrad deshalb aus zwei Teilen bestehen, die radial voneinander getrennt werden können, so dass das Zahnrad entfernt werden kann, ohne dass eine Demontage der kompletten Vorgelegewelle erforderlich ist. Das gleiche Prinzip einer mehrteiligen Ausbildung des Zahnrads ist auch bei dem Zahnrad auf der Koppelwelle anwendbar.

Es wurde bereits vorstehend erwähnt, dass die Umkonfiguration des Dosierers einfach möglich ist durch eine axiale Verschiebung der Koppelwelle, so dass die Axialstellung der Koppelwelle bestimmt, ob der Dosierer als Fahrgassendosierer oder als Normaldosierer konfiguriert ist. Diese Umkonfiguration ist einfach und schnell möglich und benötigt kein Werkzeug, was vorteilhaft ist.

Vorstehend wurde nur ein einziger erfindungsgemäße Dosierer beschrieben. Die Erfindung beansprucht jedoch auch Schutz für eine komplette Dosiereinrichtung mit mehreren Dosierern, die vorzugsweise in einer Reihe nebeneinander angeordnet sind. Hierbei treibt eine Hauptantriebswelle vorzugsweise sämtliche Dosierer an, wobei die Hauptantriebswelle drehstarr mit den einzelnen Koppelwellen verbunden ist. Hierzu kann die Hauptantriebswelle durch alle Koppelwellen hindurchgehen. Die Hauptantriebswelle und die Durchgangsbohrung in der Koppelwelle können hierbei jeweils ein Sechskantprofil aufweisen, um die drehstarre Verbindung zwischen der Hauptantriebswelle und den einzelnen Koppelwellen zu bewirken. Hierbei ist es wichtig, dass die einzelnen Koppelwellen relativ zu der Hauptantriebswelle axial verschiebbar sind, um die einzelnen Dosierer entweder als Fahrgassendosierer oder als Normaldosierer zu konfigurieren. Weiterhin ist zu erwähnen, dass sich die Vorgelegewelle vorzugsweise in axialer Richtung über alle Dosierer in der Reihe erstreckt, so dass jeder der Dosierer durch die Vorgelegewelle antreibbar ist, wenn die Vorgelegewelle für den jeweiligen Dosierer ein Zahnrad trägt.

Schließlich ist noch zu erwähnen, dass die Erfindung auch Schutz beansprucht für eine komplette landwirtschaftliche Maschine (z.B. Drillmaschine) mit einer solchen Dosiereinrichtung oder zumindest einem erfindungsgemäßen Dosierer.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.
Figur 1 zeigt eine Perspektivansicht einer erfindungsgemäßen Drillmaschine.
Figur 2 zeigt eine perspektivische Teilansicht einer erfindungsgemäßen Dosiereinrichtung mit vier Dosierern.
Figur 3 zeigt eine andere Perspektivansicht der Dosiereinrichtung aus Figur 2.
Figur 4 zeigt eine Rückansicht der Dosiereinrichtung aus den Figuren 2 und 3.
Figur 5 zeigt eine Seitenansicht der Dosiereinrichtung aus den Figuren 2-4.
Figur 6 zeigt eine Perspektivansicht der Koppelwelle eines Dosierers.
Figur 7 zeigt eine Seitenansicht der Koppelwelle gemäß Figur 6.

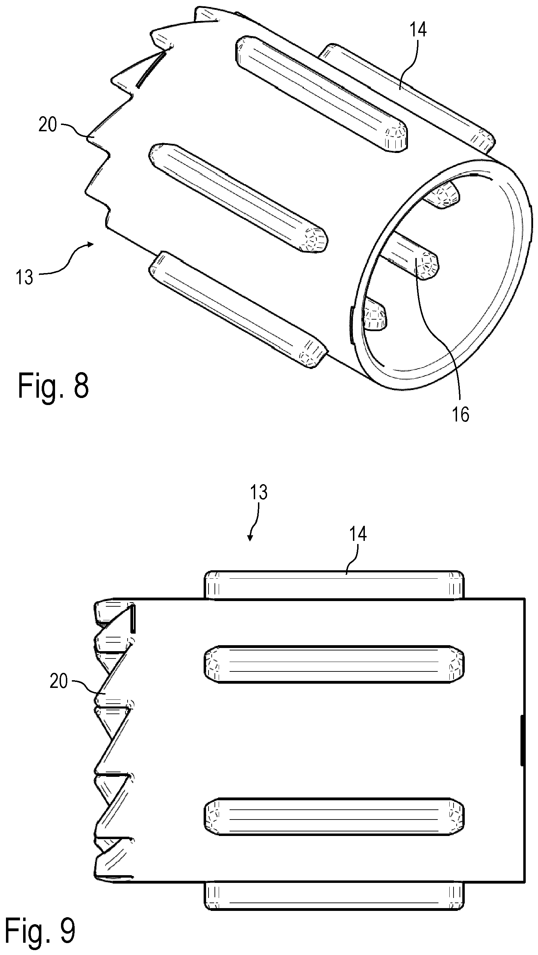

Figur 8 zeigt eine Perspektivansicht der Hohlwelle zum Antrieb des Dosierrads.
Figur 9 zeigt eine Seitenansicht der Hohlwelle gemäß Figur 8.
Figur 10 zeigt eine aufgerissene Perspektive an Sicht der Hohlwelle aus den Figuren 8 und 9
Figur 11 zeigt eine Perspektivansicht eines zweiteiligen Zahnrads zur Anbringung auf der Koppelwelle.
Figur 12 zeigt eine Seitenansicht des Zahnrads gemäß Figur 11.
Figur 13 zeigt eine Perspektivansicht des Lagerdeckels eines Dosierers.
Figur 14 zeigt eine Rückansicht des Lagerdeckels gemäß Figur 13.
Figur 15 zeigt eine Seitenansicht des Lagerdeckels gemäß den Figuren 13 und 14.
Figur 16A zeigt eine Perspektivansicht der Hohlwelle mit der Koppelwelle in einer Normalstellung.
Figur 17A zeigt eine Perspektivansicht der Hohlwelle mit der Koppelwelle und dem Zahnrad mit der Stirnverzahnung in der Normalstellung.
Figur 18A zeigt eine aufgerissene Perspektivansicht der Hohlwelle und der Koppelwelle in der Normalstellung.
Figur 19A zeigt eine teilaufgerissene Perspektivansicht der Hohlwelle mit der Koppelwelle und dem Zahnrad auf der Koppelwelle in der Normalstellung.

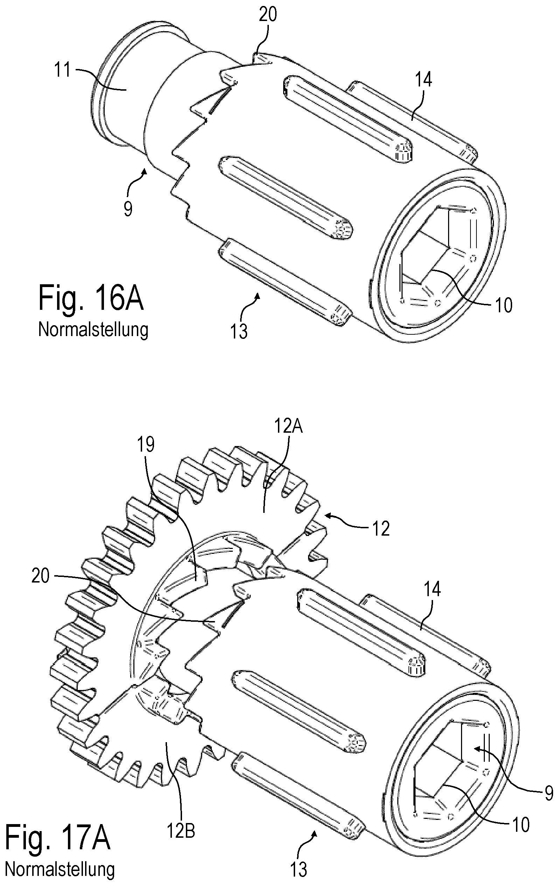

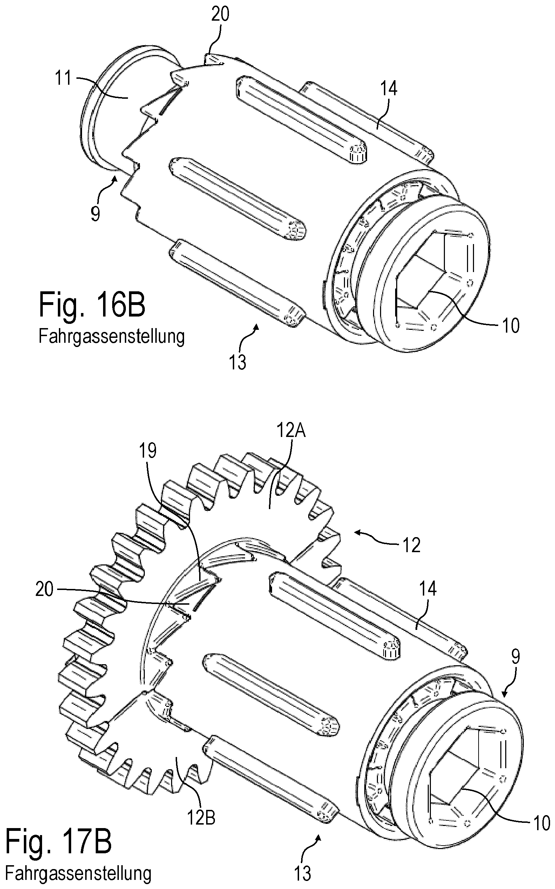

Figur 16B zeigt die Anordnung gemäß Figur 16A in einer Fahrgassenstellung.
Figur 17B zeigt die Anordnung gemäß Figur 17A in der Fahrgassenstellung.

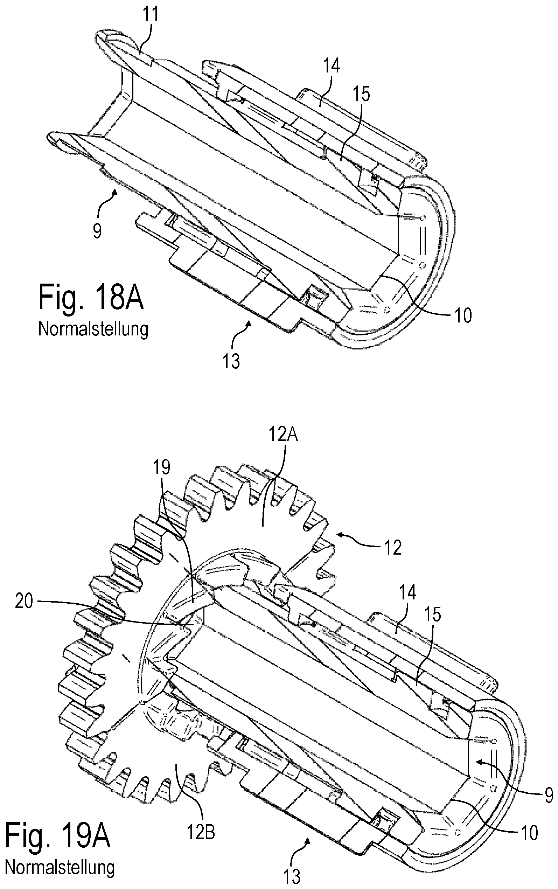

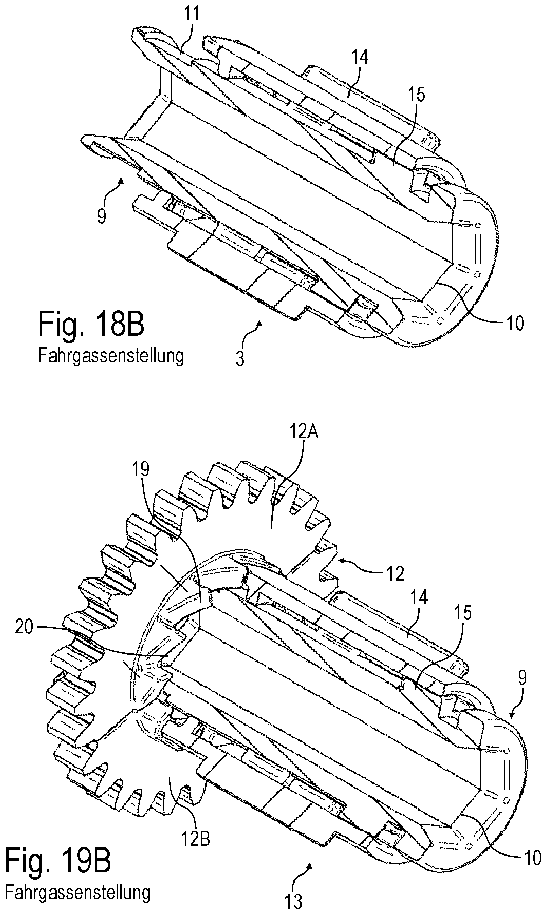

Figur 18B zeigt die Anordnung gemäß Figur 18A in der Fahrgassenstellung.
Figur 19B zeigt die Anordnung gemäß Figur 19A in der Fahrgassenstellung.

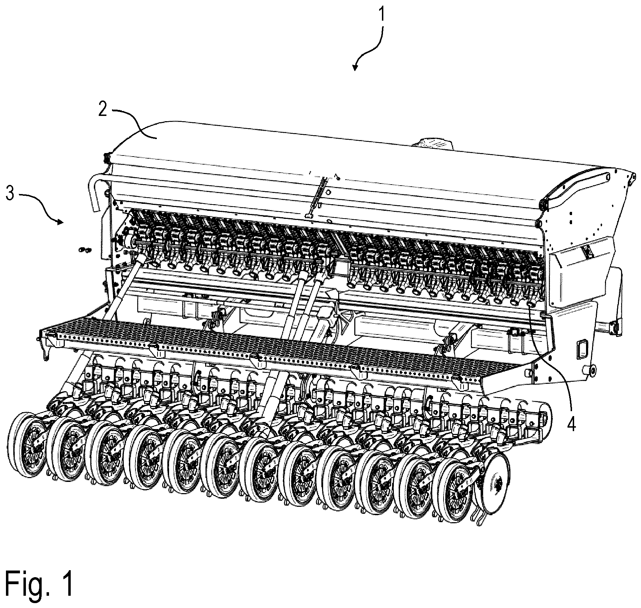

Figur 1 zeigt eine Perspektivansicht einer erfindungsgemäßen Drillmaschine 1, die weitgehend mit der eingangs erwähnten bekannten Drillmaschine übereinstimmt, wie sie in EP 2 832 203 A1 beschrieben ist. Zur Vermeidung von Wiederholungen wird deshalb hinsichtlich der grundsätzlichen Funktionsweise und des Aufbaus der Drillmaschine 1 auf die vorstehend erwähnte Patentveröffentlichung verwiesen.

An dieser Stelle ist lediglich zu erwähnen, dass die Drillmaschine 1 einen Vorratsbehälter 2 für Saatgut aufweist. Das Saatgut aus dem Vorratsbehälter 2 wird dann von einer Dosiereinrichtung 3 dosiert, wobei die Dosiereinrichtung 3 zahlreiche Dosierer 4 aufweist, die in einer Reihe nebeneinander angeordnet sind.

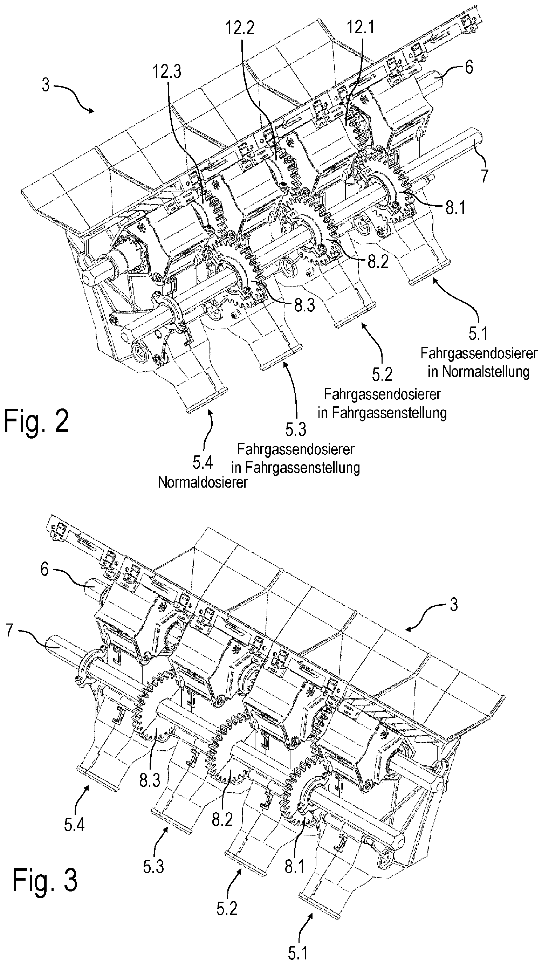

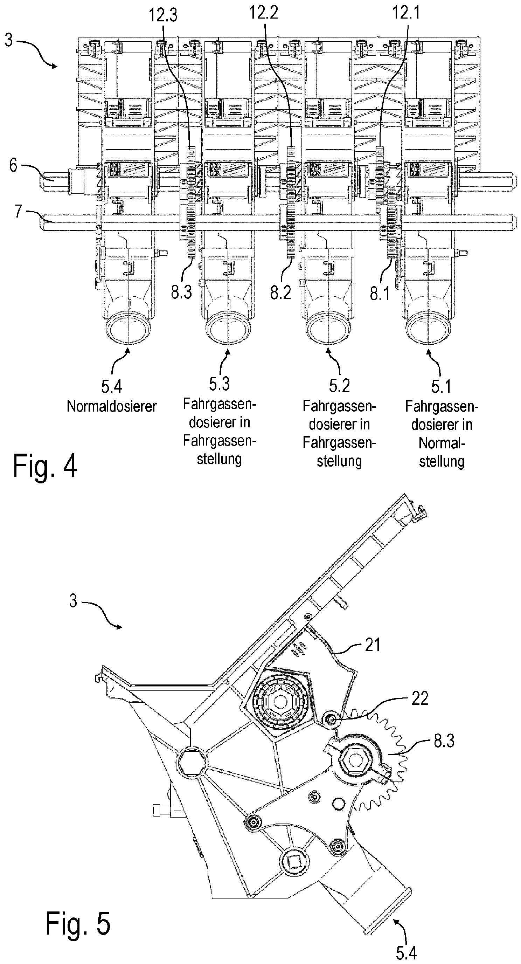

Die Figuren 2-5 zeigen verschiedene Ansichten eines Teils der Dosiereinrichtung 3 mit vier Dosierern 5.1-5.4.

Die Dosierer 5.1-5.4 können von einer Hauptantriebswelle 6 angetrieben werden, die durch sämtliche Dosierer 5.1-5.4 hindurchgeht, wie noch detailliert beschrieben wird.

Bei einer Konfiguration als Fahrgassendosierer können die einzelnen Dosierer 5.1-5.4 dagegen von einer Vorgelegewelle 7 angetrieben werden, die sich entlang der Reihe der Dosierer 5.1-5.4 über sämtliche Dosierer 5.1-5.4 erstreckt, so dass jeder der Dosierer 5.1-5.4 bei einer Konfiguration als Fahrgassendosierer grundsätzlich von der Vorgelegewelle 7 angetrieben werden kann.

Auf der Vorgelegewelle 7 befinden sich hierbei drei Zahnräder 8.1-8.3, die drehstarr mit der Vorgelegewelle 7 verbunden sind.

Hierbei ist zu erwähnen, dass die Zahnräder 8.1-8.3 jeweils zweiteilig aufgebaut sind, so dass die Zahnräder 8.1-8.3 demontiert werden können, ohne dass die Vorgelegewelle 7 entfernt werden muss.

Weiterhin ist zu erwähnen, dass die Zahnräder 8.1-8.3 auf der Vorgelegewelle 7 den drei Dosierern 5.1-5.3 zugeordnet sind, so dass die Dosierer 5.1-5.3 als Fahrgassendosierer konfiguriert und dann von der Vorgelegewelle 7 angetrieben werden können.

Dem Dosierer 5.4 ist dagegen auf der Vorgelegewelle 7 kein Zahnrad zugeordnet, so dass der Dosierer 5.4 nicht als Fahrgassendosierer konfiguriert werden kann, da er von der Vorgelegewelle 7 nicht angetrieben werden kann. Allerdings ist es grundsätzlich möglich, auf der Vorgelegewelle 7 ein weiteres Zahnrad anzubringen, das dem Dosierer 5.4 zugeordnet ist, so dass dann auch der Dosierer 5.4 als Fahrgassendosierer konfiguriert werden kann. Dieser Umbau ist relativ einfach, weil die Zahnräder 8.1-8.3 zweiteilig ausgeführt sind, so dass die Vorgelegewelle 7 für eine Demontage oder Montage der Zahnräder 8.1-8.3 nicht entfernt werden muss.

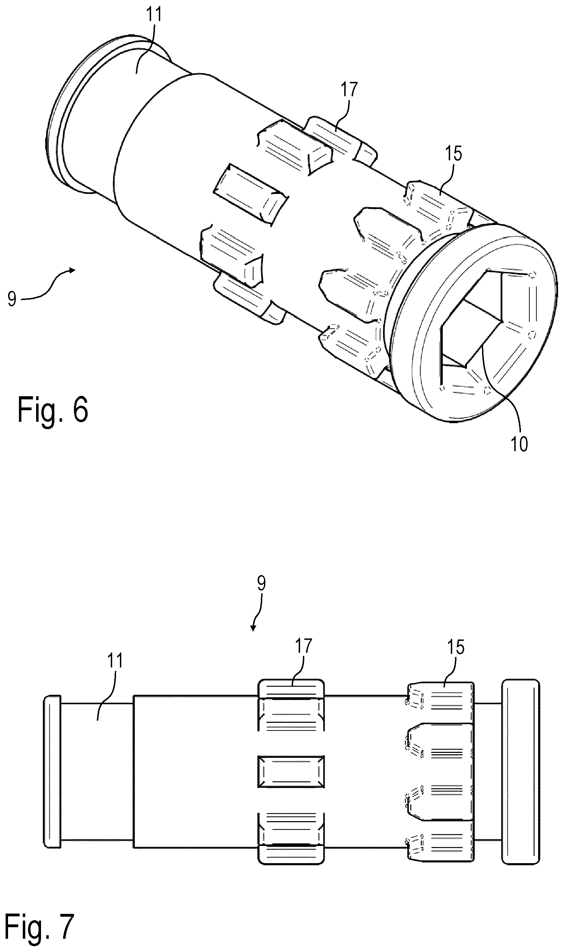

Jeder der Dosierer 5.1-5.4 weist jeweils eine Koppelwelle 9 auf, wie sie in den Figuren 6 und 7 dargestellt ist. Die einzelnen Koppelwellen 9 sind hierbei jeweils koaxial zu der Hauptantriebswelle 6 angeordnet, wobei die Hauptantriebswelle 6 durch sämtliche Koppelwellen 9 der einzelnen Dosierer 5.1-5.4 hindurchgeht. Zur drehstarren Verbindung zwischen der Hauptantriebswelle 6 und den einzelnen Koppelwellen 9 weisen die Koppelwellen 9 jeweils eine Durchgangsbohrung mit einem Sechskantprofil 10 auf, während die Hauptantriebswelle 6 ein entsprechend angepasstes Sechskantprofil aufweist. Die beiden Sechskantprofile der Koppelwelle 9 einerseits und der Hauptantriebswelle 6 andererseits bewirken eine drehstarre Verbindung zwischen der Hauptantriebswelle 6 und den einzelnen Koppelwellen 9. Allerdings sind die einzelnen Koppelwellen 9 jeweils unabhängig voneinander axial auf der Hauptantriebswelle 6 verschiebbar, um die einzelnen Dosierer 5.1-5.4 entweder als Fahrgassendosierer oder als Normaldosierer zu konfigurieren, wie noch detailliert beschrieben wird.

Die einzelnen Koppelwellen 9 weisen an einem Ende jeweils eine Drehfläche 11 auf, auf der jeweils ein Zahnrad 12 drehbar angeordnet ist, wobei die Figuren 2-4 drei Zahnräder 12.1-12.3 zeigen. Hierbei ist zu erwähnen, dass das Zahnrad 12 auf der Drehfläche 11 der Koppelwelle 9 zwar drehbar zu der Koppelwelle 9 ist, aber axial von der Koppelwelle 9 mitgenommen wird. Eine Axialbewegung der Koppelwelle 9 führt also zu einer entsprechenden Axialbewegung des Zahnrads 12 auf der Koppelwelle 9.

Auf der Koppelwelle 9 ist koaxial eine Hohlwelle 13 angeordnet, wobei die Hohlwelle 13 ein Dosierrad trägt, das zur Vereinfachung nicht dargestellt ist. Die Hohlwelle 13 ist hierbei drehstarr mit dem Dosierrad verbunden. Hierzu sind auf der äußeren Mantelfläche des Hohlwelle 13 Axialstege 14 angeformt, die in entsprechende Vertiefungen in der Wellenbohrung des Dosierrads eingreifen und dadurch die drehstarre Verbindung zwischen der Hohlwelle 13 und dem zugehörigen Dosierrad bewirken. Es ist jedoch alternativ auch möglich, dass das Dosierrad einstückig an die Hohlwelle 13 an geformt ist.

Zur drehstarren Verbindung der Koppelwelle 9 mit der Hohlwelle 13 weist die Koppelwelle 9 in ihrer äußeren Mantelfläche Koppelelemente 15 auf, die sich nur über einen Teil der axialen Länge der Koppelwelle 9 erstrecken.

Die Hohlwelle 13 weist innen entsprechende Koppelelemente 16 auf, die sich ebenfalls nur über einen Teil der axialen Länge der Hohlwelle 13 erstrecken.

Es wurde vorstehend bereits erwähnt, dass die Koppelwelle 9 in axialer Richtung verschiebbar ist, um die Hauptantriebswelle 6 wahlweise mit dem Dosierer des jeweiligen Dosierer 5.1-5.4 zu koppeln oder davon zu entkoppeln.

In einer axialen Normalstellung der Koppelwelle 9 liegen die Koppelelemente 15 der Koppelwelle 9 einerseits und die Koppelelemente 16 der Hohlwelle 13 andererseits axial in Deckung, was eine drehstarre Verbindung zwischen der Koppelwelle 9 und der Hohlwelle 13 bewirkt.

In einer axialen Fahrgassenstellung der Koppelwelle 9 liegen die Koppelelemente 15 der Koppelwelle 9 einerseits und die Koppelelemente 16 der Hohlwelle 13 andererseits dagegen axial versetzt, so dass die Koppelelemente 15, 16 nicht im Formschluss liegen und keine drehstarre Verbindung bewirken, so dass die Hauptantriebswelle 6 dann von dem zugehörigen Dosierrad entkoppelt ist.

Auf der äußeren Mantelfläche der Koppelwelle 9 befinden sich ferner axiale Sicherungsstege 17, um den axialen Bewegungsspielraum der Koppelwelle 9 zu begrenzen. In der Hohlwelle 13 befinden sich an einem Ende entsprechende Anschläge 18, um den axialen Bewegungsspielraum der Koppelwelle 9 zu begrenzen. Die Sicherungsstege 17 können also gegen die Anschläge 18 anstoßen, um den axialen Bewegungsspielraum der Koppelwelle 9 zu begrenzen.

Weiterhin ist zu erwähnen, dass die Zahnräder 12 auf der Koppelwelle 9 jeweils eine Stirnverzahnung 19 aufweisen, die in eine entsprechende Stirnverzahnung 20 an der Hohlwelle 13 eingreifen kann, wenn der jeweilige Dosierer 5.1-5.4 als Fahrgassendosierer konfiguriert ist und dann von der Vorgelegewelle 7 angetrieben werden soll.

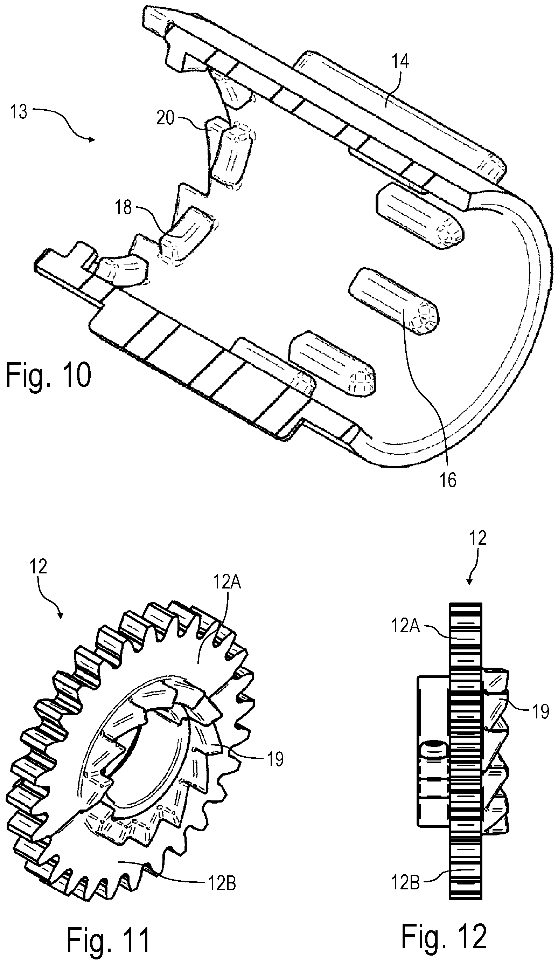

Aus der Detaildarstellung in den Figuren 11 und 12 ist weiterhin ersichtlich, dass das Zahnrad 12 aus zwei Zahnradteilen 12A, 12B besteht, was die Montage und Demontage der Zahnräder 12.1-12.3 deutlich erleichtert, da hierfür die Hauptantriebswelle 6 nicht demontiert werden muss. Es reicht hierfür vielmehr, die beiden Zahnradteile 12A, 12B zu trennen, woraufhin dann das Zahnrad 12 einfach montiert bzw. demontiert werden kann.

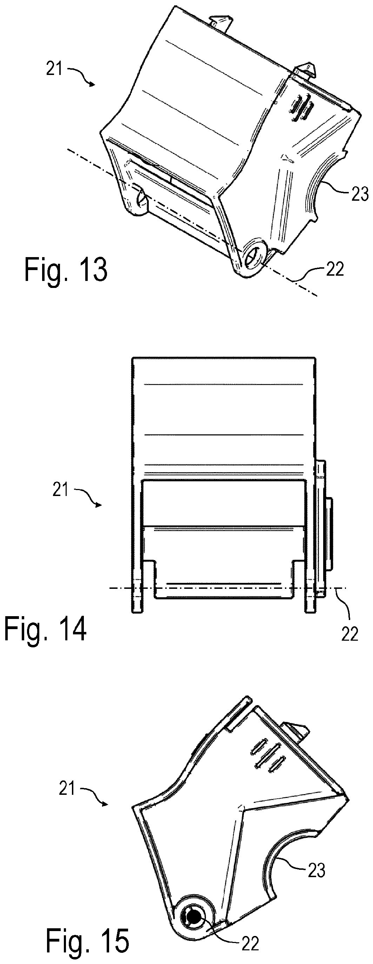

Die Figuren 13-15 zeigen ferner einen Lagerdeckel 21 des Gehäuses des Dosierers 4, wobei der Lagerdeckel 21 um eine Schwenkachse 22 schwenkbar ist und eine integrierte axiale Sicherung 23 aufweist, um den axialen Bewegungsspielraum der Koppelwelle 9 zu begrenzen.

Es wurde vorstehend bereits erwähnt, dass die Koppelwelle 9 axial verschiebbar ist, um den jeweiligen Dosierer 4 entweder als Fahrgassendosierer oder als Normaldosierer zu konfigurieren. Im Folgenden wird nun zunächst die Normalstellung der Koppelwelle 9 beschrieben, wie sie in den Figuren 16A-19A dargestellt ist.

In der Normalstellung der Koppelwelle 9 befinden sich die Koppelelemente 16 der Hohlwelle 13 axial in Deckung mit den Koppelelementen 15 der Koppelwelle 9, wodurch die Koppelwelle 9 drehstarr mit der Hohlwelle 13 und damit auch mit dem zugehörigen Dosierrad verbunden ist. Dies bedeutet, dass die Hauptantriebswelle 6 drehstarr mit dem jeweiligen Dosierer des zugehörigen Dosierers verbunden ist und das Dosierrad antreibt.

In der Normalstellung der Koppelwelle 9 ist dagegen die Stirnverzahnung 19 des Zahnrads 12 auf der Koppelwelle von der Stirnverzahnung 20 der Hohlwelle 13 getrennt. Dies bedeutet, dass die Vorgelegewelle 7 von dem Hohlrad 13 und dem zugehörigen Dosierer entkoppelt ist, so dass die Vorgelegewelle 7 den zugehörigen Dosierer nicht antreibt.

Im Folgenden wird nun die Fahrgassenstellung der Koppelwelle 9 beschrieben, wie sie in den Figuren 16B-19B dargestellt ist.

In der Fahrgassenstellung der Koppelwelle 9 liegen die Koppelelemente 15 auf der Mantelfläche der Koppelwelle 9 axial versetzt zu den Koppelelementen 16 in der Hohlwelle 13, so dass kein Formschluss zwischen den Koppelelemente 15, 16 vorhanden ist. Dies bedeutet, dass die drehstarre Verbindung zwischen der Koppelwelle 9 und der Hohlwelle 13 gelöst ist, d.h. die Hohlwelle 13 kann sich relativ zu der Koppelwelle 9 frei drehen.

In der Fahrgassenstellung der Koppelwelle 9 wird das Zahnrad 12 auf der Koppelwelle 9 dagegen von der Koppelwelle 9 gegen die Stirnseite der Hohlwelle 13 gedrückt, so dass die Stirnverzahnung 20 der Hohlwelle 13 in die Stirnverzahnung 19 des Zahnrads 12 auf der Koppelwelle 9 eingreift. Darüber hinaus wird das Zahnrad 12 auf der Koppelwelle 9 dann auch von dem zugehörigen Zahnrad 8.1-8.3 auf der Vorgelegewelle 7 angetrieben, so dass der zugehörigen Dosierer von der Vorgelegewelle 7 angetrieben wird.

Die axiale Stellung der Koppelwelle 9 bestimmt hierbei also, ob der jeweilige Dosierer 5.1-5.4 als Fahrgassendosierer oder als Normaldosierer konfiguriert ist. Diese Umkonfiguration ist einfach und ohne Werkzeug möglich, da hierfür nur die Koppelwelle 9 entsprechend verschoben werden muss. Die axiale Verschiebung der Koppelwelle 9 kann durch einen einfachen Linearantrieb erfolgen, wie er dem Fachmann bekannt ist.

Die Erfindung ist nicht auf das vorstehende beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen und insbesondere auch ohne die Merkmale des Hauptanspruchs. Die Erfindung umfasst also verschiedene Erfindungsaspekte, die unabhängig voneinander Schutz genießen.

### Bezugszeichenliste:

- 1: Drillmaschine
- 2: Vorratsbehälter
- 3: Dosiereinrichtung
- 4,5.1-5.4: Dosierer
- 6: Hauptantriebswelle
- 7: Vorgelegewelle
- 8.1-8.3: Zahnräder auf der Vorgelegewelle
- 9: Koppelwelle
- 10: Sechskantprofil der Durchgangsbohrung der Koppelwelle
- 11: Drehfläche auf der Mantelfläche der Koppelwelle
- 12, 12.1-12.3: Zahnräder auf den Koppelwellen
- 12A, 12B: Zahnradteile
- 13: Hohlwelle des Dosierrads
- 14: Axialstege auf der Hohlwelle
- 15: Koppelelemente auf der Mantelfläche der Koppelwelle
- 16: Koppelelemente in der Hohlwelle zur Kopplung mit der Koppelwelle
- 17: Sicherungsstege auf der Mantelfläche der Koppelwelle zur Begrenzung des axialen Bewegungsspielraums der Koppelwelle
- 18: Anschläge in der Hohlwelle zur Begrenzung des axialen Bewegungsspielraums der Koppelwelle
- 19: Stirnverzahnung des Zahnrads auf der Koppelwelle
- 20: Stirnverzahnung der Hohlwelle des Dosierrads
- 21: Lagerdeckel des Dosierers
- 22: Schwenkachse des Lagerdeckels
- 23: Axiale Sicherung an dem Lagerdeckel zur axialen Begrenzung des Bewegungsspielraums der Koppelwelle

## Patentansprüche

1. Dosierer (4, 5.1-5.4) zum Dosieren von Dosiergut, insbesondere zum Dosieren von Saatgut in einer Drillmaschine (1), mit
a) mindestens einem drehbaren Dosierrad zum Dosieren des Dosierguts,
b) einer drehbaren Koppelwelle (9) zum Antrieb des Dosierrads bei einer Konfiguration des Dosierers (4, 5.1-5.4) als Normaldosierer,
c) einer verstellbaren ersten Kupplung, die wahlweise
c1) bei einer Konfiguration des Dosierers (4, 5.1-5.4) als Normaldosierer die Koppelwelle (9) mit dem Dosierrad drehstarr koppelt oder
c2) bei einer Konfiguration des Dosierers (4, 5.1-5.4) als Fahrgassendosierer die Koppelwelle (9) von dem Dosierrad entkoppelt, so dass sich das Dosierrad relativ zu der Koppelwelle (9) drehen kann, und
d) einer drehbaren Vorgelegewelle (7) zum Antrieb des Dosierrads bei einer Konfiguration des Dosierers (4, 5.1-5.4) als Fahrgassendosierer,
**dadurch gekennzeichnet,**
e) **dass** der Dosierer (4, 5.1-5.4) eine verstellbare zweite Kupplung aufweist, die wahlweise
e1) bei einer Konfiguration des Dosierers (4, 5.1-5.4) als Normaldosierer die Vorgelegewelle (7) von dem Dosierrad entkoppelt, so dass sich das Dosierrad relativ zu der Vorgelegewelle (7) drehen kann, oder
e2) bei einer Konfiguration des Dosierers (4, 5.1-5.4) als Fahrgassendosierer die Vorgelegewelle (7) mit dem Dosierrad drehstarr koppelt.

2. Dosierer (4, 5.1-5.4) nach Anspruch 1, **dadurch gekennzeichnet, dass** die Koppelwelle (9) zwischen einer Fahrgassenstellung und einer Normalstellung axial verschiebbar ist, um die erste Kupplung und die zweite Kupplung in Abhängigkeit von der Axialstellung der Koppelwelle (9) zu verstellen.

3. Dosierer (4, 5.1-5.4) nach einem der vorhergehenden Ansprüche, **dadurch gekennzeichnet, dass** die beiden Kupplungen in Abhängigkeit von der axialen Stellung der Koppelwelle (9) entweder die Vorgelegewelle (7) oder die Koppelwelle (9) mit dem Dosierrad verbinden, so dass eine zeitgleiche Kopplung des Dosierrads sowohl mit der Koppelwelle (9) als auch mit der Vorgelegewelle (7) ausgeschlossen ist.

4. Dosierer (4, 5.1-5.4) nach einem der vorhergehenden Ansprüche, **dadurch gekennzeichnet,**
a) **dass** in der Fahrgassenstellung der Koppelwelle (9) die erste Kupplung die Koppelwelle (9) von dem Dosierrad entkoppelt, so dass sich das Dosierrad relativ zu der Koppelwelle (9) drehen kann, und
b) **dass** in der Normalstellung der Koppelwelle (9) die erste Kupplung die Koppelwelle (9) drehstarr mit dem Dosierrad entkoppelt, so dass der Dosierer (4, 5.1-5.4) als Normaldosierer konfiguriert ist und von der Koppelwelle (9) angetrieben wird.

5. Dosierer (4, 5.1-5.4) nach einem der vorhergehenden Ansprüche, **dadurch gekennzeichnet,**
a) dass in der Fahrgassenstellung der Koppelwelle (9) die zweite Kupplung die Vorgelegewelle (7) drehstarr mit dem Dosierrad verbindet, so dass der Dosierer (4, 5.1-5.4) als Fahrgassendosierer konfiguriert ist und von der Vorgelegewelle (7) antreibbar ist, und
a) dass in der Normalstellung der Koppelwelle (9) die zweite Kupplung die Vorgelegewelle (7) von dem Dosierrad entkoppelt, so dass sich das Dosierrad relativ zu der Vorgelegewelle (7) drehen kann.

6. Dosierer (4, 5.1-5.4) nach einem der vorhergehenden Ansprüche, **dadurch gekennzeichnet,**
a) **dass** Dosierrad auf einer drehbaren Hohlwelle (13) angeordnet ist, wobei das Dosierrad drehstarr mit der Hohlwelle (13) verbunden oder einstückig an die Hohlwelle (13) angeformt ist,
b) **dass** die Hohlwelle (13) als Bestandteil der ersten Kupplung innen Koppelelemente (16) aufweist, die sich in axialer Richtung nur über einen Teil der Koppelwelle (9) erstrecken,
c) **dass** die Koppelwelle (9) als Bestandteil der ersten Kupplung außen auf ihrer Mantelfläche Koppelelemente (15) aufweist, die sich in axialer Richtung nur über einen Teil der Koppelwelle (9) erstrecken,
d) **dass** in der Normalstellung der Koppelwelle (9) die Koppelelemente (16) der Hohlwelle (13) einerseits und die Koppelelemente (15) der Koppelwelle (9) andererseits axial in Deckung liegen und formschlüssig ineinander greifen, so dass die Koppelwelle (9) drehstarr mit der Hohlwelle (13) verbunden ist, und
e) **dass** in der Fahrgassenstellung der Koppelwelle (9) die Koppelelemente (16) der Hohlwelle (13) einerseits und die Koppelelemente (15) der Koppelwelle (9) andererseits axial zueinander versetzt sind und nicht formschlüssig ineinander greifen, so dass die Koppelwelle (9) relativ zu der Hohlwelle (13) drehbar ist und das Dosierrad von der Koppelwelle (9) entkoppelt ist.

7. Dosierer (4, 5.1-5.4) nach einem der vorhergehenden Ansprüche, **dadurch gekennzeichnet,**
a) **dass** die Koppelwelle (9) ein Zahnrad (12) trägt,
a1) wobei das Zahnrad (12) auf einer Drehfläche der Koppelwelle (9) relativ zu der Koppelwelle (9) frei drehbar ist,
a2) wohingegen das Zahnrad (12) auf der Koppelwelle (9) axial fixiert ist und mit der Koppelwelle (9) axial verschiebbar ist,
b) **dass** die Vorgelegewelle (7) ein Zahnrad (8.1-8.3) trägt, das drehstarr mit der Vorgelegewelle (7) verbunden oder einstückig an die Vorgelegewelle (7) angeformt ist,
c) **dass** die Hohlwelle (13) des Dosierrads stirnseitig eine Stirnverzahnung (20) als Bestandteil der zweiten Kupplung aufweist,
d) **dass** das Zahnrad (12) auf der Koppelwelle (9) als Bestandteil der zweiten Kupplung stirnseitig eine Stirnverzahnung (19) aufweist,
e) **dass** in der axialen Fahrgassenstellung der Koppelwelle (9)
e1) die Stirnverzahnung (19) des Zahnrads (12) auf der Koppelwelle (9) in die Stirnverzahnung (20) der Hohlwelle (13) eingreift, und
e2) das Zahnrad (8.1-8.3) auf der Vorgelegewelle (7) axial in Deckung mit dem Zahnrad (12) auf der Koppelwelle (9) liegt, so dass das Zahnrad (8.1-8.3) auf der Vorgelegewelle (7) in das Zahnrad (12) auf der Koppelwelle (9) eingreift und das Dosierrad von der Vorgelegewelle (7) antreibbar ist,
f) **dass** in der axialen Normalstellung der Koppelwelle (9)
f1) die Stirnverzahnung (19) des Zahnrads (12) auf der Koppelwelle (9) von der Stirnverzahnung (20) der Hohlwelle (13) getrennt ist, so dass sich die Hohlwelle (13) relativ zu dem Zahnrad (12) auf der Koppelwelle (9) drehen kann, und
f2) das Zahnrad (8.1-8.3) auf der Vorgelegewelle (7) axial zu dem Zahnrad (12) auf der Koppelwelle (9) versetzt ist, so dass das Zahnrad (8.1-8.3) auf der Vorgelegewelle (7) nicht in das Zahnrad (12) auf der Koppelwelle (9) eingreift und das Dosierrad von der Vorgelegewelle (7) entkoppelt ist.

8. Dosierer (4, 5.1-5.4) nach einem der vorhergehenden Ansprüche, **dadurch gekennzeichnet,**
a) **dass** die Koppelwelle (9) in ihrer äußeren Mantelfläche axiale Sicherungsstege (17) aufweist, um den axialen Bewegungsspielraum der Koppelwelle (9) zu begrenzen, und
b) **dass** die Hohlwelle (13) innen Anschläge (18) aufweist, um den axialen Bewegungsspielraum der Koppelwelle (9) zu begrenzen, wenn die Sicherungsstege (17) an die Anschläge (18) anstoßen.

9. Dosierer (4, 5.1-5.4) nach einem der vorhergehenden Ansprüche, **dadurch gekennzeichnet,**
a) **dass** die Hohlwelle (13) und das Dosierrad getrennte Bauteile sind,
b) **dass** die Hohlwelle (13) in ihrer äußeren Mantelfläche Formschlusselemente (14) aufweist, um die Hohlwelle (13) drehstarr mit dem Dosierrad zu verbinden, und
c) **dass** das Dosierrad innen komplementäre Formschlusselemente aufweist, die in die Formschlusselemente (14) der Hohlwelle (13) eingreifen und die Hohlwelle (13) drehstarr mit dem Dosierrad verbinden.

10. Dosierer (4, 5.1-5.4) nach einem der vorhergehenden Ansprüche, **dadurch gekennzeichnet,**
a) **dass** die Koppelwelle (9) von einer Hauptantriebswelle (6) angetrieben wird,
b) **dass** die Hauptantriebswelle (6) vorzugsweise koaxial zu der Koppelwelle (9) verläuft,
c) **dass** die Koppelwelle (9) an einer ihrer Stirnseiten vorzugsweise ein Innensechskant (10) aufweist, wobei die Hauptantriebswelle (6) in den Innensechskant (10) der Koppelwelle (9) eingreift, um die Koppelwelle (9) anzutreiben.

11. Dosierer (4, 5.1-5.4) nach einem der vorhergehenden Ansprüche, **dadurch gekennzeichnet,**
a) **dass** der Dosierer (4, 5.1-5.4) ein Dosiergehäuse aufweist,
b) **dass** das Dosierergehäuse ein Grundgehäuse und einen Lagerdeckel (21) aufweist,
c) **dass** der Lagerdeckel (21) schwenkbar an dem Grundgehäuse angelenkt ist, und
d) **dass** der Lagerdeckel (21) den axialen Bewegungsspielraum der Koppelwelle (9) begrenzt.

12. Dosierer (4, 5.1-5.4) nach einem der vorhergehenden Ansprüche, **dadurch gekennzeichnet,**
a) **dass** das Zahnrad (8.1-8.3) auf der Vorgelegewelle (7) mehrteilig ist, insbesondere zweiteilig, um ohne eine Demontage der Vorgelegewelle (7) eine Demontage des Zahnrads (21) auf der Vorgelegewelle (7) zu ermöglichen, und/oder
b) **dass** das Zahnrad (12) auf der Koppelwelle (9) mehrteilig ist, insbesondere zweiteilig, um ohne eine Demontage der Koppelwelle (9) eine Demontage des Zahnrads (12) auf der Koppelwelle (9) zu ermöglichen.

13. Dosierer (4, 5.1-5.4) nach einem der vorhergehenden Ansprüche, **dadurch gekennzeichnet, dass** die Umkonfiguration des Dosierers (4, 5.1-5.4) entweder als Fahrgassendosierer oder als Normaldosierer werkzeugfrei möglich ist durch eine axiale Verschiebung der Koppelwelle (9).

14. Dosiereinrichtung zum Dosieren von Dosiergut, **dadurch gekennzeichnet,**
a) **dass** mehrere Dosierer (4, 5.1-5.4) nach einem der vorhergehenden Ansprüche in einer Reihe nebeneinander angeordnet sind,
b) **dass** eine Hauptantriebswelle (6) die Koppelwellen (9) gemeinsam antreibt und drehstarr miteinander koppelt,
c) **dass** die einzelnen Koppelwellen (9) relativ zu der Hauptantriebswelle (6) axial verschiebbar sind,
d) **dass** die Koppelwellen (9) der einzelnen Dosierer (4, 5.1-5.4) unabhängig voneinander und individuell für jeden der Dosierer (4, 5.1-5.4) axial verschiebbar sind zwischen der Fahrgassenstellung und der Normalstellung, so dass jeder der Dosierer (4, 5.1-5.4) durch eine axiale Verschiebung der jeweiligen Koppelwelle (9) individuell entweder als Fahrgassendosierer oder als Normaldosierer konfigurierbar ist, und
e) **dass** sich die Vorgelegewelle (7) in axialer Richtung über alle Dosierer (4, 5.1-5.4) in der Reihe erstreckt, so dass jeder der Dosierer (4, 5.1-5.4) durch die Vorgelegewelle (7) antreibbar ist, wenn die Vorgelegewelle (7) für den jeweiligen Dosierer (4, 5.1-5.4) ein Zahnrad trägt.

15. Landwirtschaftliche Maschine, insbesondere Drillmaschine mit mindestens einem Dosierer (4, 5.1-5.4) nach einem der Ansprüche 1 bis 13 und/oder einer Dosiereinrichtung nach Anspruch 14.
